# EUROPEAN PATENT APPLICATION

(11) **EP 4 617 328 A1**
(43) Date of publication of application: **17.09.2025**
(21) Application number: 25160967.3
(22) Date of filing: 28.02.2025
(51) Int. Cl.: C09C 1/00, G02B 5/28

(54) **BIFUNCTIONAL PIGMENT**

(30) Priority: 14.03.2024 US 202418605629
(71) Applicant: Viavi Solutions Inc., Chandler, AZ 85286 (US)
(72) Inventor: RAKSHA, Vladimir P., Santa Rosa, CA 95403 (US); DELST, Kees-Jan, Fairfax, CA 94930 (US); KOHLMANN, Paul T., Windsor, CA 95492 (US)
(74) Representative: Murgitroyd & Company

(57) **Abstract**

A pigment flake may comprise a multilayer optical structure. The multilayer optical structure may have a first surface with a first modulation that corresponds to a relief of a diffraction grating. The multilayer optical structure may have a second surface having a second modulation, with the second surface being opposite from the first surface and the second modulation being smaller than the first modulation such that the second surface is comparatively flatter than the first surface. The multilayer optical structure may exhibit diffraction colors for a first range of angles of the multilayer optical structure with respect to an angle of incident light, and may exhibit an interference color for a second range of angles of the multilayer optical structure with respect to the angle of the incident light.

## Description

### BACKGROUND

A conventional interference effect pigment flake comprises relatively thin layers of different optical materials coated in a particular order on a carrier. If the carrier is made of a transparent material, such as mica or glass, then the pigment flake is colored and transparent. In one example, a substrate comprising mica or glass is coated on both sides with a set of layers (herein referred to as an optical stack) comprising different optical materials of varying thickness. The combination of optical materials with different refraction indices and different thicknesses creates interference structures, with the substrate acting as a plane of symmetry (i.e., an imaginary plane that bisects the structure of the pigment flake into mirrored halves). The symmetry of the optical stacks means that similar layers in the pigment flake, being in the same order, face each other with one of the layers as a symmetry plane.

Optically variable pigment flakes include a layer of reflective metal (rather than mica or glass), which makes a pigment flake colored and opaque. In one example, each optical stack in an optically variable pigment flake comprises a semi-transparent chromium absorber layer and a transparent colorless magnesium fluoride (MgF₂) layer formed on a substrate of a reflective aluminum (Al). In this case, the optical stacks are symmetric relative to the Al substrate.

### SUMMARY

In some implementations, a pigment flake includes a multilayer optical structure comprising, a first surface with a first modulation that corresponds to a relief of a diffraction grating; and a second surface having a second modulation, the second surface being opposite from the first surface and the second modulation being smaller than the first modulation such that the second surface is comparatively flatter than the first surface, wherein the multilayer optical structure is to exhibit diffraction colors for a first range of angles of the multilayer optical structure with respect to an angle of incident light, and is to exhibit an interference color for a second range of angles of the multilayer optical structure with respect to the angle of the incident light.

The second modulation may be at least 50% smaller than the first modulation.

A surface of a layer of the multilayer optical structure that is between the first surface and the second surface may have a third modulation. The third modulation may be smaller than the first modulation and may be larger than the second modulation.

The multilayer optical structure may comprise an intermediate layer between a first optical stack of the multilayer optical structure and a second optical stack of the multilayer optical structure.

The intermediate layer may have a thickness in a range from approximately 100 nanometers (nm) to approximately 2000 nm.

The multilayer optical structure may comprise an optical stack including a transparent layer having a thickness that may be selected to reduce the second modulation of the second surface as compared to the modulation of the first surface.

The transparent layer of the optical stack may have a thickness in a range from approximately 50 nanometers (nm) to approximately 1500 nm.

A thickness of the multilayer optical structure may be in a range from approximately 400 nanometers to approximately 3 micrometers.

The first range of angles may include angles that are greater than approximately 45 degrees.

The second range of angles may include angles that are less than approximately 45 degrees.

The multilayer optical structure may include at least one pair of symmetric optical stacks.

The multilayer optical structure may include at least one pair of asymmetric optical stacks.

The multilayer optical structure may include at least one one-cavity optical stack.

The multilayer optical structure may include at least one two-cavity optical stack.

In some implementations, a method of forming a bifunctional pigment includes providing a substrate having a diffraction grating structure on a surface of the substrate; forming a release layer on the surface of the substrate; forming a first optical stack on the release layer, the first optical stack being formed such that a surface of the first optical stack has a relief of the diffraction grating structure; forming a magnetizable layer over the first optical stack; forming a second optical stack over the magnetizable layer, the second optical stack being formed such that a modulation of a surface of the second optical stack is smaller than a modulation of the surface of the first optical stack having the relief of the diffraction grating structure; and removing the release layer to separate the substrate from a multilayer optical structure comprising the first optical stack, the magnetizable layer, and the second optical stack.

The modulation of the surface of the second optical stack may be at least 50% smaller than the modulation of the surface of the first optical stack having the relief of the diffraction grating structure.

The method may further comprise forming an intermediate layer associated with increasing a thickness of the bifunctional pigment flake, the intermediate layer being between the first optical stack and the second optical stack.

The method may further comprise forming an intermediate layer associated with increasing a thickness of the bifunctional pigment flake, the intermediate layer being integrated in at least one of the first optical stack or the second optical stack.

In some implementations, a bifunctional pigment flake includes a first optical stack, wherein a surface of the first optical stack has a first modulation; a magnetizable layer over the first optical stack; and a second optical stack over the magnetizable layer, wherein a surface of the second optical stack has a second modulation, the second modulation being less than approximately half of the first modulation, wherein the first optical stack and the second optical stack are to cause the pigment flake to exhibit diffraction colors for a first range of angles of the bifunctional pigment flake with respect to an angle of incident light, and to exhibit an interference color for a second range of angles of the bifunctional pigment flake with respect to the angle of the incident light.

Modulations of surfaces within the pigment flake may decrease along a direction from the surface of the first optical stack to the surface of the second optical stack.

### BRIEF DESCRIPTION OF THE DRAWINGS

Figs. 1A-1B are diagrams illustrating an example of conventional pigment flakes oriented in a planar structure.
Fig. 2 is a diagram illustrating an example of conventional magnetizable pigment flakes oriented in a cylindrical structure.
Fig. 3 is a diagram illustrating an example of a bifunctional pigment flake as described herein.
Fig. 4 is a diagram illustrating a particular example of modulation reduction of a surface of a multilayer optical structure of a bifunctional pigment flake.
Figs. 5A-5B are diagrams associated with an example implementation of a bifunctional pigment flake comprising a multilayer optical structure including a first optical stack and a second optical stack.
Figs. 6A-6C are diagrams associated with another example implementation of a bifunctional pigment flake comprising a multilayer optical structure including a first optical stack and a second optical stack.
Fig. 7 is a diagram associated with another example implementation of a bifunctional pigment flake comprising a multilayer optical structure including a first optical stack and a second optical stack.
Fig. 8 is a flowchart of an example process associated with formation of a bifunctional pigment flake described herein.

### DETAILED DESCRIPTION

The following detailed description of example implementations refers to the accompanying drawings. The same reference numbers in different drawings may identify the same or similar elements.

A pigment flake exhibiting diffraction of incident light may be a multiple-layer flake with symmetrical optical stacks on opposite sides of a reflective substrate. A symmetric optical stack might comprise an interference structure that provides goniochromatic features. Some goniochromatic diffraction pigment flakes comprise a magnetizable core. In one particular example, deposition of nickel on a diffraction grating pattern produces magnetic needles along a linear grating pattern, with the magnetic needles allowing magnetic alignment of diffractive pigment flakes dispersed in an organic binder. Here, a pigment flake may have optical stacks (e.g., thin film optical structures) symmetrical to the magnetizable layer. In some scenarios, the diffraction grating can be embossed onto a roll coating substrate. A surface relief on both sides of such a pigment flake repeats a surface relief of the substrate used for fabrication of the pigment.

A magnetizable diffraction pigment flake with a high frequency diffraction grating has a high diffraction efficiency, but a low total reflectance. The total reflectance of such a pigment flake is impacted by a height of protruding elements of the diffraction grating. In practice, light is more dispersed as the height of protruding elements of the diffraction grating increases. A crossed grating is a two-dimensional periodic diffraction grating with a periodicity along two directions. The grating orientations with respect to one other may be in the range of 45 degrees (°) to 90°. In one particular case, a high-frequency diffraction crossed grated pigment flake with more than 3800 lines per millimeters (mm) provides an iridescent blue color at an angle of incidence of approximately 75°. For a 3800 lines per mm grating and an angle of incidence of approximately 75°, only wavelengths shorter than approximately 525 nanometers (nm) (blue) are diffracted back in a direction of the incident beam of light.

Structures of some interference pigment flakes are not symmetric. In one example, a magnetic interference pigment flake can include a metallic or oxidic magnetic layer, on both sides of which are formed Fabry-Perot (FP) structures, with each FP structure including a thin chromium absorber layer, a dielectric MgF₂ spacer layer, and an Al₂O₃ coating layer. The two Fabry-Perot structures can be different (e.g., have different thicknesses or layers), in which case color-shift effects are shown from opposite sides of the pigment flake. In practice, in a pigment with different colors on different sides, colors blend together, which produces a third color with poor color-shifting appearance. Thus, a pigment comprising pigment flakes with different colors on opposite sides degrade a color performance of the pigment.

Some pigment flakes have a single cavity design - meaning that the pigment flakes include a single layer of an optical spacer between layers of a reflector and a semi-transparent absorber in a given interference structure. Optical stacks of a such pigment flake therefore have a single cavity thin film structure, which can be expressed as M₁/D/M₂ where M₁ is an opaque layer of highly reflective metal (e.g., Al, silver (Ag), gold (Au), platinum (Pt), or the like), M₂ is a semi-transparent layer of transient metal (e.g., chromium (Cr), titanium (Ti), tungsten (W), or the like), and D is a layer of dielectric or semi-conductor material (e.g., MgF₂, silicon dioxide (SiO₂), titanium dioxide (TiO₂), zinc sulfide (ZnS), or the like). Some pigment flakes have a multiple cavity (e.g., two cavity) design. A two-cavity design for an optical stack can be expressed as M₁/D/M₂/D/ M₂. A complete design for a two-cavity pigment flake comprising a two-cavity optical stack on each side and can therefore be expressed as M₂/D/ M₂/D/ M₁/D/ M₂/D/M₂.

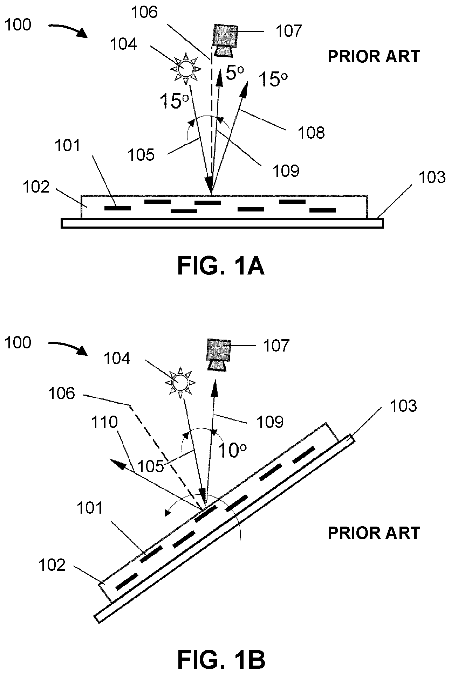

Goniochromatic pigment flakes dispersed in an organic binder and printed on a flat surface demonstrate the appearance of several colors at different observation angles. The brightest color appears when the observation corresponds to the aspecular 10° geometry shown in Fig. 1A. In Fig. 1A, article 100 comprises pigment flakes 101 that are dispersed in an organic binder 102 that is printed on a substrate 103. A beam of incident light from a light source 104 shines onto the pigment flakes 101 along a direction 105 at 15° to normal 106. According to the law of reflection, an angle of reflection is equal to the angle of incidence. Therefore, light coming to the pigment flakes 101 is reflected in the direction 108 at 15° to the normal 106. However, at this angle, an observer 107 sees the image of the light source 104, but does not see the color of the pigment flakes 101 because the pigment flakes 101 are highly reflective. To see the color of the pigment flakes 101, but not the light coming from the light source 104, the observer 107 can be mounted at 5° to the normal 106. At this angle, the light coming to the observer 107 along a direction 109 represents the bright appearance of a first color of the pigment. The first color can be, for example, green for a green-to-blue pigment.

A change of the color in a color-shifting pigment (e.g., from green to blue) occurs as a result of a change of an observation angle. The angle can be changed in three ways - moving the light source 104, moving the observer 107, or by tilting the article 100 (without moving the light source 104 or the observer 107). An example of tilting of the article 100 is shown schematically in Fig. 1B. As shown in Fig. 1B, the light source 104 and the observer 107 are at the same locations as in Fig. 1A. Here, the article 100 on the substrate 103 is tilted (rotated) counterclockwise in the plane of the page. As compared to Fig. 1A, light incident at direction 105 is reflected in a direction 110 away from the observer 107. Rather, the observer 107 sees scattered light coming from the pigment flakes 101 in the direction 109. In this example, the color of the light at the observer 107 is dark blue (rather than green, as in the orientation shown in Fig. 1A).

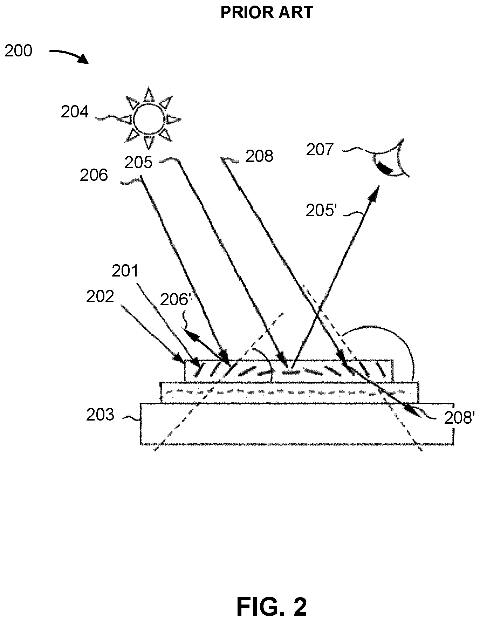

For a magnetizable color-shifting pigment, magnetizable pigment flakes are dispersed in a liquid organic binder and printed on a surface, and the pigment flakes are aligned (along their longest dimension) along magnetic lines of an applied external magnetic field. Manipulation of a magnet enables the magnetic field to be controlled such that the magnetic field can be parallel to the surface or curved with respect to the surface and having a concave or a convex configuration. This enables the magnetizable pigment flakes to be oriented to form a Fresnel-like mirror. The Fresnel-like mirror can be cylindrical, parabolic, toroidal, cone-shaped, or the like, depending on the magnetic field configuration. Incident light reflected from the pigment flakes in such an arrangement generate different interactive optical effects. An example of magnetizable pigment flakes oriented in a cylindrical structure is shown in Fig. 2.

In Fig. 2, an article 200 is exposed to a light source 204 and a light ray 205 reflects off a pigment flake 201, resulting in light ray 205' being directed toward an observer 207. In contrast, light rays 206 and 208, which are substantially parallel to the light ray 205, are reflected such that light rays 206' and 208' are directed away from the observer 207 as a result of the alignment of the pigment flakes 201 in the direction of the magnetic field (rather than parallel to a substrate 203 of the article 200). In this case and at this orientation of the article 200 relative to the light source 204 and the observer 207, an element formed by the pigment flakes 201 in the organic binder 202 appear as a bright reflective band in a region corresponding to light ray 205/205' and as a dark non-reflective area (e.g., black) in regions corresponding to light rays 206/206' and 208/208'.

An article that exhibits both a prime interference color and colors other than a dark or black color at the same time is desirable (e.g., to improve security). A goniochromatic pigment on a diffraction grating at a normal observation angle has a reflectance that is lower than a reflectance of a pigment that is deposited on a flat substrate. On the other hand, an article printed with a diffraction pigment produces rainbow-like colors at high observation angles, whereas the article with pigment platelets is dark. Therefore, developing a pigment exhibiting a prime interference color together with diffraction colors at a normal observation angle is desirable. In practice, such a pigment flake should have a diffraction efficiency that is relatively balanced with total reflectance.

Some implementations described herein provide a bifunctional pigment flake. In some implementations, the bifunctional pigment flake comprises a multilayer optical structure including a first surface with a first modulation that corresponds to a relief of a diffraction grating and a second surface having a second modulation that is smaller than the first modulation (e.g., such that the second surface is comparatively flatter than the first surface). In some aspects, the bifunctional pigment flake with this multilayer optical structure exhibits diffraction colors for a first range of angles of the multilayer optical structure with respect to an angle of incident light, and exhibits an interference color for a second range of angles of the multilayer optical structure with respect to the angle of the incident light. In the bifunctional pigment flake described herein, a diffraction efficiency is relatively balanced with total reflectance due to the first surface of the bifunctional pigment flake having a comparatively high modulation (e.g., to provide a sufficient diffraction efficiency but low total reflectance) while the second surface of the bifunctional pigment flake having a comparatively low modulation (e.g., to provide a low diffraction efficiency but a high total reflectance). In some implementations, the bifunctional pigment flake having these characteristics is formed through a purposeful increment of a thickness of the pigment flake that causes the modulation of the second surface of the bifunctional pigment flake to be smaller than that of the first surface of the bifunctional pigment flake (e.g., a surface adjacent to a grated substrate). Additional details are provided below.

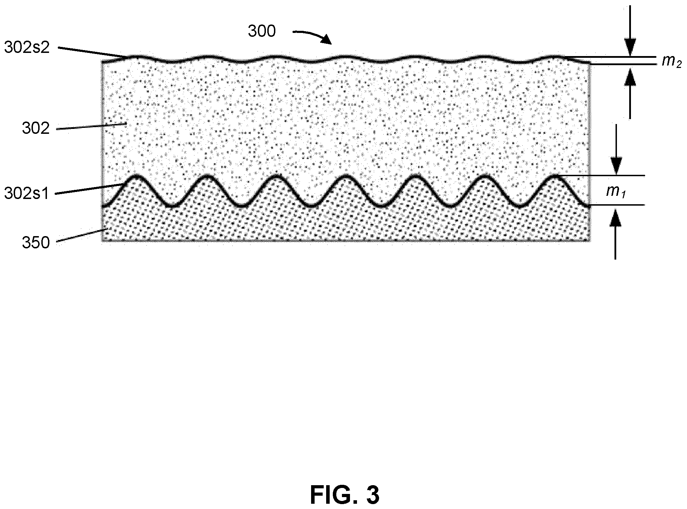

Fig. 3 is a diagram illustrating an example of a bifunctional pigment flake 300 on a substrate 350. In some implementations, as shown in Fig. 3, the bifunctional pigment flake 300 comprises a multilayer optical structure 302 that has a first surface 302s1 and a second surface 302s2.

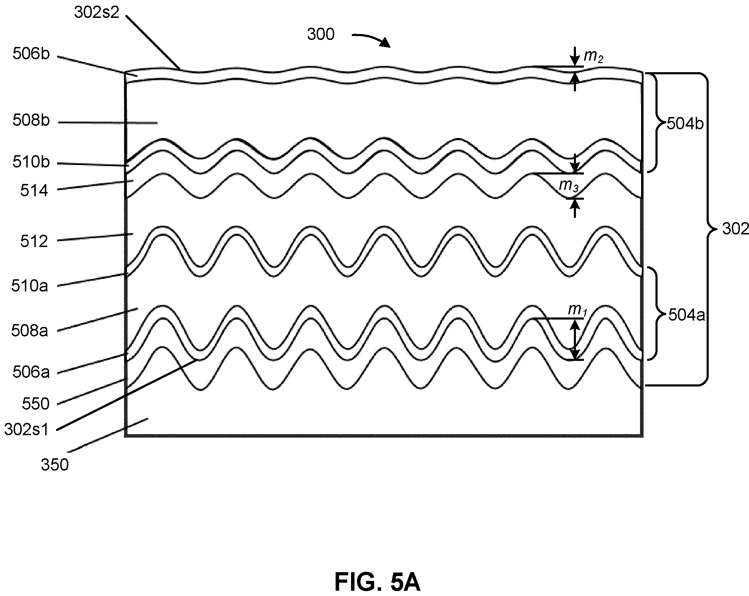

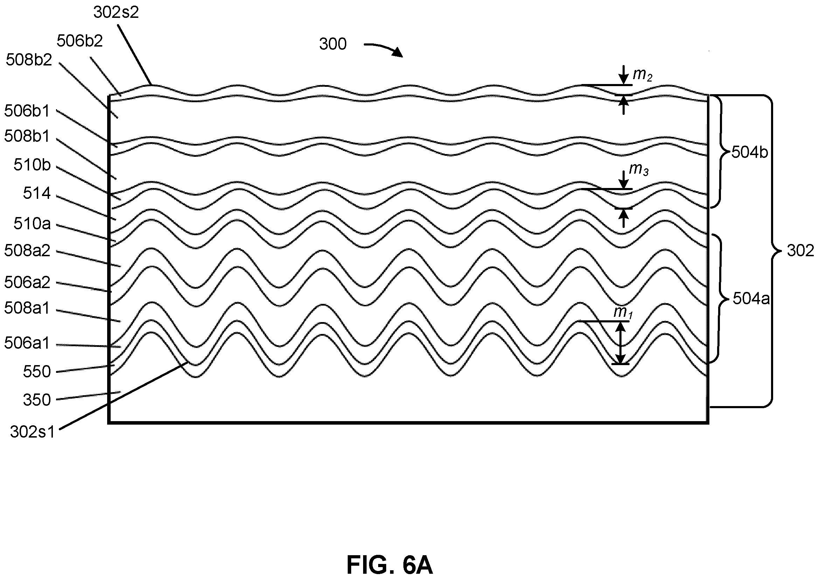

The multilayer optical structure 302 is a multilayer structure that includes a plurality of optical stacks that cause the bifunctional pigment flake 300 to exhibit diffraction colors for a first range of angles and exhibit an interference color for a second range of angles. In some implementations, the first range of angles may include angles that are greater than approximately 45°, and the second range of angles may include angles that are less than approximately 45°. In general, the first range of angles may include angles that are greater than an angle α, and the second range of angles may include angles that are less than the angle α. Additional details regarding the multilayer optical structure 302 are provided below with respect to Figs. 5A-5B and 6A-6C. In some implementations, a thickness of the multilayer optical structure 302 may be in a range from approximately 400 nanometers (nm) to approximately 3 micrometers (µm).

In some implementations, as shown in Fig. 3, the multilayer optical structure 302 of the bifunctional pigment flake 300 is formed over a surface of the substrate 350 that comprises a diffraction grating structure (e.g., a periodic structure comprising a series of ridges and valleys). In some implementations, as shown in Fig. 3, the first surface 302s1 has a modulation that corresponds to a relief of the diffraction grating structure of the substrate 350. That is, the first surface 302s1 may have a modulation that mirrors that of the diffraction grating structure of the substrate 350. As used herein, the term "modulation" refers to a distance between a given high point (e.g., a ridge) and a given low point (e.g., a valley) on a surface. Put another way, a modulation may refer to a depth of a profile of a surface.

As shown in Fig. 3, the first surface 302s1 of the multilayer optical structure 302 (and the surface of the substrate 350) has a modulation *m1*, and the second surface 302s2 has a modulation identified as *m2.* As shown, the modulation *m2* is smaller than the modulation *m1* That is, the second surface 302s2 is comparatively flatter than the first surface 302s1. In some implementations, the modulation *m2* is at least approximately 50% smaller than the modulation *m1.* That is, the modulation *m2* is in some implementations less than half the modulation *m1.* In some implementations, the difference in modulation between the first surface 302s1 and the second surface 302s2 enables the bifunctional pigment flake 300 to exhibit diffraction colors for a first range of angles of the multilayer optical structure 302 with respect to an angle of incident light, and to exhibit an interference color for a second range of angles of the multilayer optical structure 302 with respect to the angle of the incident light, as described below.

In some implementations, a thickness of the multilayer optical structure 302 (e.g., a thickness of one or more layers of the multilayer optical structure 302) causes the modulation *m2* of the second surface 302s2 to be smaller than the modulation *m1* of the first surface 302s1. Thus, in some implementations, the thickness of the multilayer optical structure 302 (e.g., the thickness of one or more layers of the multilayer optical structure 302) can be controlled or selected so as to achieve a desired modulation reduction of the second surface 302s2 (relative to the modulation of the first surface 302s1).

As indicated above, Fig. 3 is provided as an example. Other examples may differ from what is described with regard to Fig. 3. The number and arrangement of layers shown in Fig. 3 are provided as an example. In practice, there may be additional layers, fewer layers, different layers, or differently arranged layers than those shown in Fig. 3. Furthermore, two or more layers shown in Fig. 3 may be implemented within a single layer, or a single layer shown in Fig. 3 may be implemented as multiple, distributed layers. Additionally, or alternatively, a set of layers (e.g., one or more layers) shown in Fig. 3 may perform one or more functions described as being performed by another set of layers shown in Fig. 3.

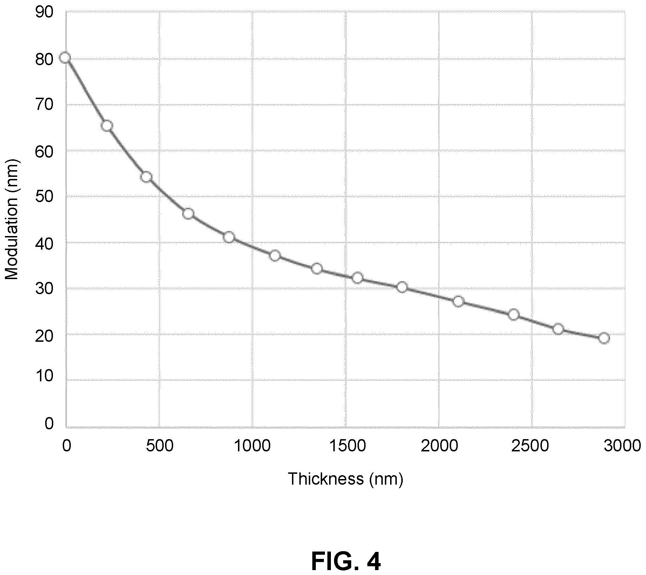

Fig. 4 is a diagram illustrating a particular example of modulation reduction of the second surface 302s2 (with respect to the first surface 302s1) that can be achieved by increasing a thickness of the multilayer optical structure 302. In the example of Fig. 4, a multilayer optical structure 302 comprising layers of thin film MgF₂ (with different thicknesses) are deposited on a polyester crossed grating substrate 350 that has a surface with a modulation of 80 nm. As shown in Fig. 4, the modulation of the second surface 302s2 decreases from 80 nm to 19 nm as a thickness of the multilayer optical structure 302 approaches 2900 nm. In some implementations, modulation reduction of the second surface 302s2 (e.g., as compared to the modulation of the first surface 302s1) may depend on one or more characteristics of the multilayer optical structure 302, such as a thickness of one or more layers of the multilayer optical structure 302, a porosity of one or more layers of the multilayer optical structure 302, a crystallinity of one or more layers of the multilayer optical structure 302, or a presence (or absence) of a columnar structure within one or more layers of the multilayer optical structure 302, among other examples.

As indicated above, Fig. 4 is provided as an example. Other examples may differ from what is described with regard to Fig. 4.

In some implementations, the multilayer optical structure 302 includes a pair of optical stacks. Figs. 5A-5B are diagrams associated with an example implementation of a bifunctional pigment flake 300 comprising a multilayer optical structure 302 including a first optical stack 504a and a second optical stack 504b. In the example shown in Fig. 5A, the first optical stack 504a includes an absorber layer 506a (e.g., a first semi-transparent Cr layer), a transparent layer 508a (e.g., a first dielectric MgF₂ layer), and a reflector layer 510a (e.g., a first opaque Al layer). Similarly, the second optical stack 504b includes a reflector layer 510b (e.g., a second opaque Al layer), a transparent layer 508b (e.g., a second dielectric MgF2 layer), and an absorber layer 506b (e.g., a second semi-transparent Cr layer). As further shown, the multilayer optical structure 302 further includes an intermediate layer 512 (e.g., a third MgF2 layer) and a magnetizable layer 514 between the first optical stack 504a and the second optical stack 504b.

In some implementations, as shown in Fig. 5A, the multilayer optical structure 302 is formed on a release layer 550 on a surface of the substrate 350. In some implementations, the release layer 550 is a removable layer (e.g., a layer that dissolves in the presence of a solvent) that enables separation of the bifunctional pigment flake 300 from the substrate 350.

In the example shown in Fig. 5A, the first optical stack 504a and the second optical stack 504b are one-cavity optical stacks (i.e., the first optical stack 504a comprises a single cavity and the second optical stack 504b comprises a single cavity). Further, the first optical stack 504a is symmetrical to the second optical stack 504b (e.g., with the intermediate layer 512 and the magnetizable layer 514 acting as a plane of symmetry). In some implementations, the first optical stack 504a and/or the second surface 302s2 may be a multi-cavity optical stack (e.g., the first optical stack 504a and/or the second optical stack 504b may be a two-cavity optical stack, an example of which is described below with respect to Figs. 6A-6C). Additionally, or alternatively, the first optical stack 504a and the second optical stack 504b may in some implementations be asymmetric (e.g., such that a layer structure of the first optical stack 504a is different from a layer structure of the second optical stack 504b with respect to a central plane formed by the intermediate layer 512 and the magnetizable layer 514).

In some implementations, as shown in Fig. 5A and described herein, the modulation *m1* of the first surface 302s1 of the multilayer optical structure 302 is greater than the modulation *m2* of the second surface 302s2 of the multilayer optical structure 302. Further, as illustrated in Fig. 5A, a surface of a layer of the multilayer optical structure 302 that is between the first surface 302s1 and the second surface 302s2 has a modulation that is smaller than the modulation *m1* of the first surface 302s1 and that is larger than the modulation *m2* of the second surface 302s2. For example, as illustrated in Fig. 5A, a modulation *m3* of a surface of the intermediate layer 512 is larger than the modulation *m2* of the second surface 302s2 and is smaller than the modulation *m1* of the first surface 302s1. In some implementations, modulations of surfaces within the multilayer optical structure 302 decrease along a direction moving from the first surface 302s1 to the second surface 302s2 (e.g., the modulation of surfaces decreases in a direction moving away from the relief of the diffraction grating that is the first surface 302s1).

In the example shown in Fig. 5A, a thickness of the bifunctional pigment flake 300 is controlled by a thickness of the intermediate layer 512. Thus, in some implementations, the incorporation of the intermediate layer 512 (e.g., between the first optical stack 504a and the second optical stack 504b) can be used to provide a thickness that causes the second surface 302s2 to be flatter than the first surface 302s1. In some implementations, the intermediate layer 512 is a layer of an indifferent material (e.g., a dielectric material, such as MgF₂). In some implementations, as shown in Fig. 5A, the intermediate layer 512 is between the first optical stack 504a and the second optical stack 504b (e.g., near a middle of a single-cavity bifunctional pigment flake 300).

In some implementations, the bifunctional pigment flake 300 shown in Fig. 5A can be formed using vacuum deposition of layers over the substrate 350. For example, the surface of the substrate 350 comprising the diffraction grating structure can be coated with layers of different materials by thermal evaporation in a vacuum. In this example, the substrate 350 is coated with the release layer 550. Next, the absorber layer 506a is deposited on the release layer 550. The transparent layer 508a is deposited on the absorber layer 506a, after which the reflector layer 510a is deposited on the transparent layer 508a. Here, the transparent layer 508a (e.g., the layer between the absorber layer 506a and the reflector layer 510a) defines the color of the goniochromatic interference thin film structure of the first optical stack 504a.

Next, the intermediate layer 512 is deposited on the reflector layer 510a. In some implementations, the intermediate layer 512 may comprise a dielectric material, such as MgF₂. In some implementations, a thickness of the intermediate layer may be in a range from approximately 100 nm to approximately 2000 nm. Notably, the intermediate layer 512 does not define the color of the bifunctional pigment flake 300. Here, the purpose of the intermediate layer 512 is to increase a physical thickness of the multilayer optical structure 302 so as to control (e.g., decrease) the modulation *m2* of the second surface 302s2. Put another way, the intermediate layer 512 may serve as a spacer that governs the total thickness of the bifunctional pigment flake 300 in association with reducing the modulation *m2* of the second surface 302s2 relative to the modulation *m1* of the first surface 302s1.

The magnetizable layer 514 (e.g., a layer comprising any suitable magnetizable material) is formed on the intermediate layer 512, and the second optical stack 504b is formed on the magnetizable layer 514. In this example, formation of the second optical stack 504b includes formation of the reflector layer 510b, followed by formation of the transparent layer 508b, followed by formation of the absorber layer 506b. Here, a top surface of the absorber layer 506b is the second surface 302s2. In some implementations, a thickness of absorber layer 506b may match that of absorber layer 506a, a thickness of the transparent layer 508b may match a thickness of the transparent layer 508a, and/or a thickness of the reflector layer 510b may match that of the reflector layer 510a. Additionally, or alternatively, a thickness of absorber layer 506b may differ from that of absorber layer 506a, a thickness of the transparent layer 508b may differ from a thickness of the transparent layer 508a, and/or a thickness of the reflector layer 510b may differ from that of the reflector layer 510a. The thicknesses of the transparent layers 508a and 508b determine the color exhibited by the bifunctional pigment flake 300. In some implementations, a transparent layer 508 (e.g., the transparent layer 508a, the transparent layer 508b) may comprise a material with a low refractive index (e.g., MgF₂, SiO₂, or the like). Additionally, or alternatively, a transparent layer 508 may comprise a material with a high refractive index (e.g., ZnS, TiO₂, or the like). The multilayer optical structure 302 shown in Fig. 5A can be expressed as follows:
Second optical stack 504b
Magnetizable layer 514
Intermediate layer 512
First optical stack 504a
where each optical stack 504 comprises a respective absorber layer 506, transparent layer 508, and reflector layer 510.

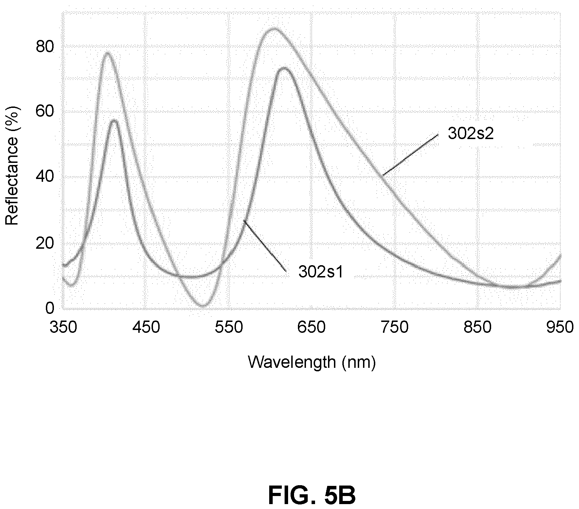

In a particular example implementation, the multilayer optical structure 302 may be a gold-to-green single-cavity interference pigment thin film symmetric structure that is deposited on a crossed diffraction grating with a frequency of 3500 lines per mm and a modulation of 80 nm. Here, the structure has the following configuration:
Second optical stack 504b (510 nm, see below)
   Magnetizable layer 514 (80 nm nickel)
   Intermediate layer 512 (600 nm MgF2)
First optical stack 504a (510 nm, see below)
   Release layer 550
   Substrate 350
where each optical stack 504 comprises an absorber layer 506 (10 nm Cr), a transparent layer 508 (420 nm MgF2), and a reflector layer 510 (80 nm Al). In this example, a total thickness of the multilayer optical structure 302 is 1700 nm. Fig. 5B is a diagram illustrating spectral characteristics of a first side of the multilayer optical structure 302 (e.g., a side of the multilayer optical structure 302 with the first surface 302s1) and a second side of the multilayer optical structure 302 (e.g., a side of the multilayer optical structure 302 with the second surface 302s2) at diffuse (e.g., 8°) geometry. Here, the first surface 302s1 has a modulation *m1* of 80 nm and, due in part to the structure of the multilayer optical structure 302 (e.g., the thickness of the intermediate layer 512), the second surface 302s2 has a modulation *m2* of 30 nm.

As illustrated in Fig. 5B, the first side of the multilayer optical structure 302 (i.e., the side with the first surface 302s1 with the 80 nm modulation) has a generally lower reflectance than a reflectance of the second side of the multilayer optical structure 302 (e.g., the side with the second surface 302s2 with the 30 nm modulation) over a range of wavelengths from 350 nm to 950 nm. Further, the chroma (C*) and hue (h*) of the first side are lower than the chroma and the hue of the second side, as illustrated in the table below:

| | C* | h* |
|---|---|---|
| First surface 302s1 side | 49.26 | 17.96 |
| Second surface 302s2 side | 58.6 | 16.06 |

As indicated above, Figs. 5A-5B are provided as examples. Other examples may differ from what is described with regard to Figs. 5A-5B. The number and arrangement of layers shown in Fig. 5A are provided as an example. In practice, there may be additional layers, fewer layers, different layers, or differently arranged layers than those shown in Fig. 5A. Furthermore, two or more layers shown in Fig. 5A may be implemented within a single layer, or a single layer shown in Fig. 5A may be implemented as multiple, distributed layers. Additionally, or alternatively, a set of layers (e.g., one or more layers) shown in Fig. 5A may perform one or more functions described as being performed by another set of layers shown in Fig. 5A.

In some implementations, the thickness of the multilayer optical structure 302 and, therefore, the thickness used to control the modulation of the second surface 302s2, can be at least partially defined by a design of the multilayer optical structure 302. That is, in some implementations, the bifunctional pigment flake 300 can be designed such that a thickness of the pigment itself causes the second surface 302s2 to be flatter than the first surface 302s1. In some implementations, a multilayer optical structure 302, including one or more two-cavity optical stacks 504, can be designed to achieve such a multilayer optical structure 302.

Figs. 6A-6C are diagrams associated with another example implementation of a bifunctional pigment flake 300 comprising a multilayer optical structure 302 including a first optical stack 504a and a second optical stack 504b. In the example shown in Fig. 6A, the first optical stack 504a and the multilayer optical structure 302 are two-cavity optical stacks. In the example shown in Fig. 6A, the first optical stack 504a includes an absorber layer 506a1 (e.g., a first semi-transparent Cr layer), a transparent layer 508a1 (e.g., a first dielectric MgF₂ layer), an absorber layer 506a2 (e.g., a second semi-transparent Cr layer), a transparent layer 508a2 (e.g., a second dielectric MgF₂ layer) and a reflector layer 510a (e.g., a first opaque Al layer). Similarly, the second optical stack 504b includes a reflector layer 510b (e.g., a second opaque Al layer), a transparent layer 508b1 (e.g., a third dielectric MgF2 layer), an absorber layer 506b1 (e.g., a third semi-transparent Cr layer), a transparent layer 508b2 (e.g., a fourth dielectric MgF2 layer), an absorber layer 506b2 (e.g., a fourth semi-transparent Cr layer). As further shown, the multilayer optical structure 302 further includes an intermediate layer 512 (e.g., a fifth MgF2 layer) and a magnetizable layer 514 between the first optical stack 504a and the second optical stack 504b. Notably, in this example implementation, the multilayer optical structure 302 does not include the intermediate layer 512. Here, the thickness of the multilayer optical structure 302 is increased via the thickness of the two-cavity design (rather than through the use of an intermediate layer 512).

In some implementations, control of the thickness of the multilayer optical structure 302 may be provided by a thickness of one or more transparent layers 508. For example, by increasing an overall thickness of the multilayer optical structure 302, the thickness of one or more transparent layers 508 may serve to reduce the modulation *m2* of the second surface 302s2 (as compared to the modulation *m1* of the first surface 302s1). In some implementations, the thickness of such a transparent layer 508 can be in a range from approximately 50 nm to approximately 1500 nm. The multilayer optical structure 302 in the example shown in Fig. 6A can be expressed as follows:
Second optical stack 504b
Magnetizable layer 514
Intermediate layer 512
First optical stack 504a
where first optical stack 504a comprises an absorber layer 506a1, a transparent layer 508a1, an absorber layer 506a2, a transparent layer 508a2, and a reflector layer 510a; and second optical stack 504b comprises a reflector layer 510b, a transparent layer 508b1, an absorber layer 506b1, a transparent layer 508b2, an absorber layer 506b2.

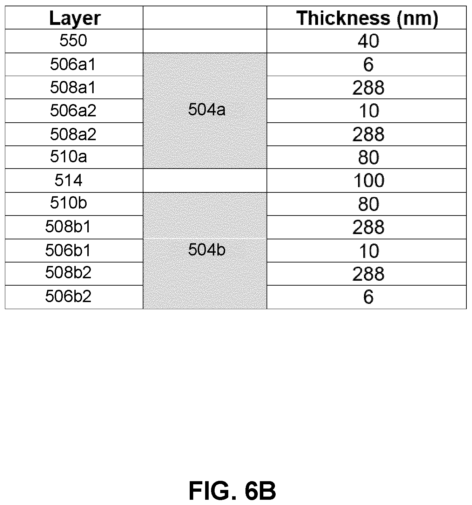

In a particular example implementation, the multilayer optical structure 302 may form a symmetric red-to-gold pigment with a pair of two-cavity optical stacks 504 having the optical design shown in Fig. 6B. In this example, the substrate 350 is coated with a release layer 550 in the form of water-soluble sodium chloride. The release layer 550 is then coated with the absorber layer 506a1, followed by the transparent layer 508a1, the absorber layer 506a2, the transparent layer 508a2, and the reflector layer 510a. As shown, these layers form a two-cavity first optical stack 504a of the multilayer optical structure 302. The magnetizable layer 514 (e.g., stainless steel or another suitable ferromagnetic material) is then deposited on the reflector layer 510a. Notably, the magnetizable layer 514 serves as the plane of the multilayer optical structure 302 in this example. The second optical stack 504b is then formed on the magnetizable layer 514 by forming the reflector layer 510b, the transparent layer 508b1, the absorber layer 506b1, the transparent layer 508b2, and the absorber layer 506b2. Example thicknesses of various layers are illustrated in the table shown in Fig. 6B, which provides a total thickness of the structure of approximately 1400 nm. Here, the modulation *m1* of the first surface 302s1 is 80 nm and the modulation *m2* of the second surface 302s2 is 34 nm. This difference in modulation of the surfaces of the multilayer optical structure 302 results in a difference in optical characteristics.

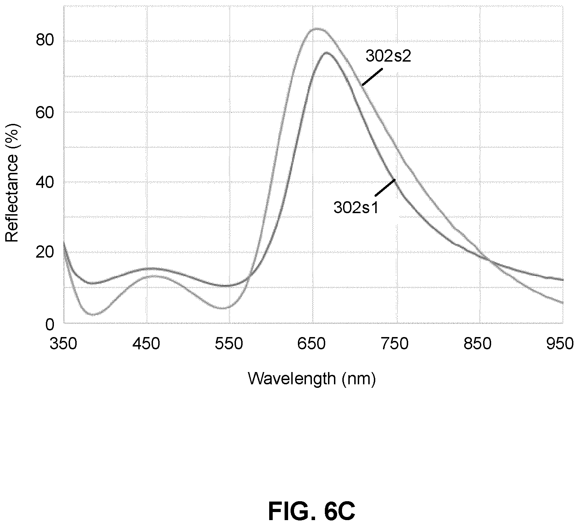

Fig. 6C is a diagram illustrating spectral characteristics of a first side of the multilayer optical structure 302 (e.g., a side of the multilayer optical structure 302 with the first surface 302s1) and a second side of the multilayer optical structure 302 (e.g., a side of the multilayer optical structure 302 with the second surface 302s2). Here, as noted above, the first surface 302s1 has a modulation *m1* of 80 nm and, due in part to the structure of the multilayer optical structure 302 (e.g., the thickness of the intermediate layer 512), the second surface 302s2 has a modulation *m2* of 34 nm.

As illustrated in Fig. 6C, the first side of the multilayer optical structure 302 (i.e., the side with the first surface 302s1 with the 80 nm modulation) has a generally lower reflectance than a reflectance of the second side of the multilayer optical structure 302 (e.g., the side with the second surface 302s2 with the 30 nm modulation) over a range of wavelengths from 350 nm to 950 nm. Further, a diffraction efficiency of the first side is different from a diffraction efficiency of the second side. Reflection and diffraction efficiencies of the first and second sides of this example multilayer optical structure 302 are summarized in the following table:

| | Modulation (nm) | Color (chroma C*) in L*a*b* color space | Reflectance (R, %) | Diffraction efficiency, (chroma C* units) |
|---|---|---|---|---|
| First surface 302s1 side | 80 | 38.2 | 77 | 24 |
| Second surface 302s2 side | 34 | 53.01 | 83 | 17 |

As illustrated in this example, chroma C* for the sample with 80 nm modulation at -80° observation angle is 24 units. For the sample with 36 nm modulation at the same observation angle, the chroma C* is 17 units. In other words, the first surface 302s1 side (e.g., the side with 80 nm modulation) reflects approximately 69% of incident light with a higher diffraction efficiency of 24 chroma units. In contrast, the second surface 302s2 side (e.g., the side with 34 nm modulation) reflects approximately 78% of light at lower diffraction efficiency of 17 units. The example experimental results in the table above show that lower reflectance and higher diffraction efficiency are provided at the first surface 302s1 side of the multilayer optical structure 302 with the higher modulation *m1* (e.g., the side adjacent to the substrate 350), while higher reflectance, lower diffraction efficiency, and brighter color are provided at the second surface 302s2 side of the multilayer optical structure 302 with the lower modulation m2.

As indicated above, Figs. 6A-6C are provided as examples. Other examples may differ from what is described with regard to Figs. 6A-6C. The number and arrangement of layers shown in Figs. 6A-6B are provided as an example. In practice, there may be additional layers, fewer layers, different layers, or differently arranged layers than those shown in Figs. 6A-6B. Furthermore, two or more layers shown in Figs. 6A-6B may be implemented within a single layer, or a single layer shown in Figs. 6A-6B may be implemented as multiple, distributed layers. Additionally, or alternatively, a set of layers (e.g., one or more layers) shown in Figs. 6A-6B may perform one or more functions described as being performed by another set of layers shown in Figs. 6A-6B.

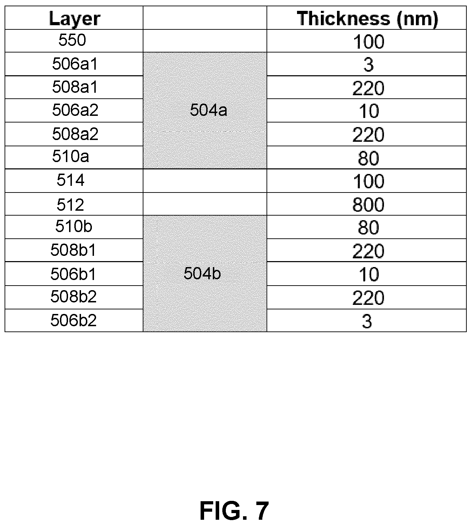

In some scenarios, a thickness of a two-cavity optical design may be insufficient to reduce the modulation *m2* of the second surface 302s2 of the multilayer optical structure 302. In such a scenario, both the thickness of the two-cavity design and an intermediate layer 512 can be used to provide a thickness that reduces the modulation *m2* of the second surface 302s2. Fig. 7 is a diagram illustrating an example of a gold bifunctional pigment flake 300 formed with this combination of techniques.

In this example, the substrate 350 is coated with a release layer 550, and the release layer 550 is then coated with the absorber layer 506a1, followed by the transparent layer 508a1, the absorber layer 506a2, the transparent layer 508a2, and the reflector layer 510a. As shown, these layers form a two-cavity first optical stack 504a of the multilayer optical structure 302. The magnetizable layer 514 (e.g., stainless steel or another suitable ferromagnetic material) is then deposited on the reflector layer 510a, and an intermediate layer 512 is formed on the magnetizable layer 514. Notably, the magnetizable layer 514 and the intermediate layer 512 serve as the plane of the multilayer optical structure 302 in this example. The second optical stack 504b is then formed on the magnetizable layer 514 by forming the reflector layer 510b, the transparent layer 508b1, the absorber layer 506b1, the transparent layer 508b2, and the absorber layer 506b2. Example thicknesses of various layers are illustrated in the table shown in Fig. 7, which provides a total thickness of the structure of 1866 nm. Here, the modulation *m1* of the first surface 302s1 is 80 nm and the modulation *m2* of the second surface 302s2 is 28 nm. This difference in modulation of the surfaces of the multilayer optical structure 302 results in a difference in optical characteristics.

As indicated above, Fig. 7 is provided as an example. Other examples may differ from what is described with regard to Fig. 7. The number and arrangement of layers shown in Fig. 7 are provided as an example. In practice, there may be additional layers, fewer layers, different layers, or differently arranged layers than those shown in Fig. 7. Furthermore, two or more layers shown in Fig. 7 may be implemented within a single layer, or a single layer shown in Fig. 7 may be implemented as multiple, distributed layers. Additionally, or alternatively, a set of layers (e.g., one or more layers) shown in Fig. 7 may perform one or more functions described as being performed by another set of layers shown in Fig. 7.

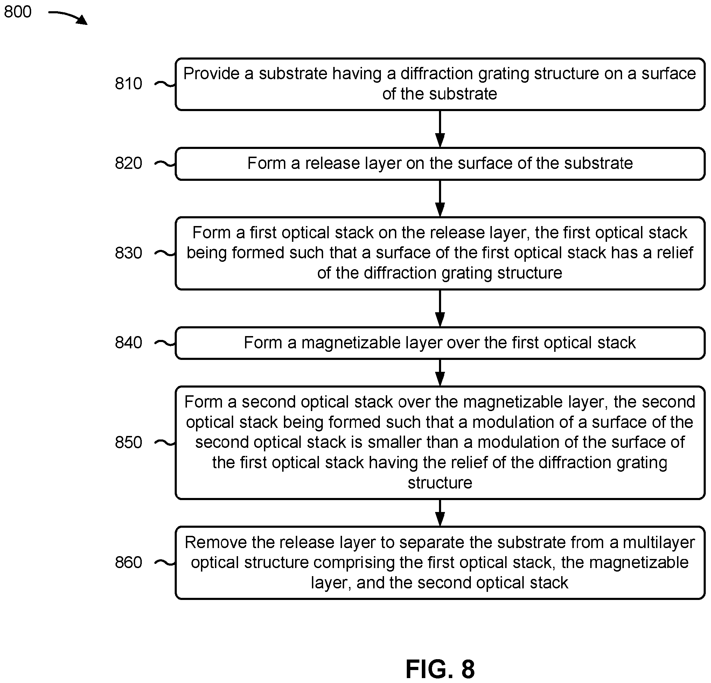

Fig. 8 is a flowchart of an example process 800 associated with the formation of a bifunctional pigment flake 300 described herein.

As shown in Fig. 8, process 800 may include providing a substrate having a diffraction grating structure on a surface of the substrate (block 810). For example, a substrate 350 having a diffraction grating structure on a surface of the substrate 350 may be provided, as described above.

As further shown in Fig. 8, process 800 may include forming a release layer on the surface of the substrate (block 820). For example, a release layer 550 may be formed on the surface of the substrate 350, as described above.

As further shown in Fig. 8, process 800 may include forming a first optical stack on the release layer, the first optical stack being formed such that a surface of the first optical stack has a relief of the diffraction grating structure (block 830). For example, a first optical stack 504a may be formed on the release layer 550, the first optical stack 504a being formed such that a first surface 302s1 of the first optical stack 504a has a relief of the diffraction grating structure, as described above.

As further shown in Fig. 8, process 800 may include forming a magnetizable layer over the first optical stack (block 840). For example, a magnetizable layer 514 may be formed over the first optical stack 504a, as described above.

As further shown in Fig. 8, process 800 may include forming a second optical stack over the magnetizable layer, the second optical stack being formed such that a modulation of a surface of the second optical stack is smaller than a modulation of the surface of the first optical stack having the relief of the diffraction grating structure (block 850). For example, a second optical stack 504b may be formed over the magnetizable layer 514, the second optical stack 504b being formed such that a modulation *m2* of second surface 302s2 of the second optical stack 504b is smaller than a modulation *m1* of the first surface 302s1 of the first optical stack 504a having the relief of the diffraction grating structure, as described above.

As further shown in Fig. 8, process 800 may include removing the release layer to separate the substrate from a multilayer optical structure comprising the first optical stack, the magnetizable layer, and the second optical stack (block 860). For example, the release layer may be removed to separate the substrate 350 from a multilayer optical structure 302 comprising the first optical stack 504a, the magnetizable layer 514, and the second optical stack 504bff, as described above.

Process 800 may include additional implementations, such as any single implementation or any combination of implementations described below and/or in connection with one or more other processes described elsewhere herein.

In a first implementation, the modulation *m2* of the second surface 302s2 of the second optical stack 504b is at least 50% smaller than the modulation *m1* of the first surface 302s1 of the first optical stack 504a having the relief of the diffraction grating structure.

In a second implementation, alone or in combination with the first implementation, process 800 includes forming an intermediate layer 512 associated with increasing a thickness of the bifunctional pigment flake 300, the intermediate layer 512 being between the first optical stack 504a and the second optical stack 504b.

In a third implementation, alone or in combination with one or more of the first and second implementations, process 800 includes forming an intermediate layer 512 associated with increasing a thickness of the bifunctional pigment flake 300, the intermediate layer 512 being integrated in at least one of the first optical stack 504a or the second optical stack 504b.

Although Fig. 8 shows example blocks of process 800, in some implementations, process 800 includes additional blocks, fewer blocks, different blocks, or differently arranged blocks than those depicted in Fig. 8. Additionally, or alternatively, two or more of the blocks of process 800 may be performed in parallel.

In some implementations, a multilayer optical structure 302 described herein (e.g., a multilayer optical structure 302 with a thickness that causes the second surface 302s2 to be flatter than the first surface 302s1) enables the bifunctional pigment flake 300 to exhibit diffraction colors for a first range of angles (e.g., angles greater than approximately 45°) and exhibits an interference color for a second range of angles (e.g., angles less than approximately 45°). This capability is provided by because diffraction efficiency is relatively balanced with total reflectance due to the first surface 302s1 having a comparatively high modulation (e.g., to provide a sufficient diffraction efficiency but low total reflectance) while the second surface 302s2 has a comparatively low modulation (e.g., to provide a low diffraction efficiency but a high total reflectance), with the difference in modulation being provided due to the thickness of the bifunctional pigment flake 300 that causes the modulation *m2* of the second surface 302s2 to be smaller than the modulation *m1* of the first surface 302s1.

The foregoing disclosure provides illustration and description, but is not intended to be exhaustive or to limit the implementations to the precise forms disclosed. Modifications and variations may be made in light of the above disclosure or may be acquired from practice of the implementations.

As used herein, the term "component" is intended to be broadly construed as hardware, firmware, or a combination of hardware and software. It will be apparent that systems and/or methods described herein may be implemented in different forms of hardware, firmware, and/or a combination of hardware and software. The actual specialized control hardware or software code used to implement these systems and/or methods is not limiting of the implementations. Thus, the operation and behavior of the systems and/or methods are described herein without reference to specific software code - it being understood that software and hardware can be used to implement the systems and/or methods based on the description herein.

Even though particular combinations of features are recited in the claims and/or disclosed in the specification, these combinations are not intended to limit the disclosure of various implementations. In fact, many of these features may be combined in ways not specifically recited in the claims and/or disclosed in the specification. Although each dependent claim listed below may directly depend on only one claim, the disclosure of various implementations includes each dependent claim in combination with every other claim in the claim set. As used herein, a phrase referring to "at least one of" a list of items refers to any combination of those items, including single members. As an example, "at least one of: a, b, or c" is intended to cover a, b, c, a-b, a-c, b-c, and a-b-c, as well as any combination with multiple of the same item.

No element, act, or instruction used herein should be construed as critical or essential unless explicitly described as such. Also, as used herein, the articles "a" and "an" are intended to include one or more items, and may be used interchangeably with "one or more." Further, as used herein, the article "the" is intended to include one or more items referenced in connection with the article "the" and may be used interchangeably with "the one or more." Furthermore, as used herein, the term "set" is intended to include one or more items (e.g., related items, unrelated items, or a combination of related and unrelated items), and may be used interchangeably with "one or more." Where only one item is intended, the phrase "only one" or similar language is used. Also, as used herein, the terms "has," "have," "having," or the like are intended to be open-ended terms. Further, the phrase "based on" is intended to mean "based, at least in part, on" unless explicitly stated otherwise. Also, as used herein, the term "or" is intended to be inclusive when used in a series and may be used interchangeably with "and/or," unless explicitly stated otherwise (e.g., if used in combination with "either" or "only one of").

## Claims

1. A pigment flake, comprising:
a multilayer optical structure comprising,
a first surface with a first modulation that corresponds to a relief of a diffraction grating; and
a second surface having a second modulation, the second surface being opposite from the first surface and the second modulation being smaller than the first modulation such that the second surface is comparatively flatter than the first surface,
wherein the multilayer optical structure is to exhibit diffraction colors for a first range of angles of the multilayer optical structure with respect to an angle of incident light, and is to exhibit an interference color for a second range of angles of the multilayer optical structure with respect to the angle of the incident light.

2. The pigment flake of claim 1, wherein the second modulation is at least 50% smaller than the first modulation.

3. The pigment flake of claim 1 or claim 2, wherein a surface of a layer of the multilayer optical structure that is between the first surface and the second surface has a third modulation, the third modulation being smaller than the first modulation and being larger than the second modulation.

4. The pigment flake of any of claims 1 to 3, wherein the multilayer optical structure comprises an intermediate layer between a first optical stack of the multilayer optical structure and a second optical stack of the multilayer optical structure;
optionally wherein the intermediate layer has a thickness in a range from approximately 100 nanometers (nm) to approximately 2000 nm.

5. The pigment flake of any of claims 1 to 4, wherein the multilayer optical structure comprises an optical stack including a transparent layer having a thickness that is selected to reduce the second modulation of the second surface as compared to the modulation of the first surface;
optionally wherein the transparent layer of the optical stack has a thickness in a range from approximately 50 nanometers (nm) to approximately 1500 nm.

6. The pigment flake of any of claims 1 to 5, wherein a thickness of the multilayer optical structure is in a range from approximately 400 nanometers to approximately 3 micrometers.

7. The pigment flake of any of claims 1 to 6, wherein the first range of angles includes angles that are greater than approximately 45 degrees; and/or
wherein the second range of angles includes angles that are less than approximately 45 degrees.

8. The pigment flake of any of claims 1 to 7, wherein the multilayer optical structure includes:
at least one pair of symmetric optical stacks; and/or
at least one pair of asymmetric optical stacks.

9. The pigment flake of any of claims 1 to 8, wherein the multilayer optical structure includes:
at least one one-cavity optical stack; and/or
at least one two-cavity optical stack.

10. The pigment flake of any of claims 1 to 9, wherein the multilayer optical structure comprises:
a first optical stack, wherein a surface of the first optical stack has the first modulation;
a magnetizable layer over the first optical stack; and
a second optical stack over the magnetizable layer, wherein a surface of the second optical stack has the second modulation, the second modulation being less than approximately half of the first modulation.

11. The pigment flake of claim 10, wherein modulations of surfaces within the pigment flake decrease along a direction from the surface of the first optical stack to the surface of the second optical stack.

12. A method of forming a bifunctional pigment flake, comprising:
providing a substrate having a diffraction grating structure on a surface of the substrate;
forming a release layer on the surface of the substrate;
forming a first optical stack on the release layer, the first optical stack being formed such that a surface of the first optical stack has a relief of the diffraction grating structure;
forming a magnetizable layer over the first optical stack;
forming a second optical stack over the magnetizable layer, the second optical stack being formed such that a modulation of a surface of the second optical stack is smaller than a modulation of the surface of the first optical stack having the relief of the diffraction grating structure; and
removing the release layer to separate the substrate from a multilayer optical structure comprising the first optical stack, the magnetizable layer, and the second optical stack.

13. The method of claim 12, wherein the modulation of the surface of the second optical stack is at least 50% smaller than the modulation of the surface of the first optical stack having the relief of the diffraction grating structure.

14. The method of claim 12 or claim 13, further comprising forming an intermediate layer associated with increasing a thickness of the bifunctional pigment flake, the intermediate layer being between the first optical stack and the second optical stack.

15. The method of any of claims 12 to 14, further comprising forming an intermediate layer associated with increasing a thickness of the bifunctional pigment flake, the intermediate layer being integrated in at least one of the first optical stack or the second optical stack.
